# EUROPEAN PATENT APPLICATION

(11) **EP 3 319 159 A1**
(43) Date of publication of application: **09.05.2018**
(21) Application number: 16817992.7
(22) Date of filing: 29.06.2016
(51) Int. Cl.: H01M 8/0202, C25D 11/26, H01M 8/10, C22C 14/00, C22F 1/00, C22F 1/18

(54) **TITANIUM MATERIAL**

(30) Priority: 02.07.2015 JP 2015133974
(71) Applicant: Nippon Steel & Sumitomo Metal Corporation, Tokyo 100-8071 (JP)
(72) Inventor: IMAMURA, Junko, Tokyo 100-8071 (JP); MASAKI, Yasuhiro, Tokyo 100-8071 (JP); TAKEBE, Saho, Tokyo 100-8071 (JP); KAMINAKA, Hideya, Amagasaki-shi Hyogo 660-0891 (JP)
(74) Representative: J A Kemp
(86) International application number: PCT/JP2016/069345
(87) International publication number: WO 2017/002884

(57) **Abstract**

There is provided a titanium product for a separator of a polymer electrolyte fuel cell (PEFC). The titanium product includes a substrate made of a titanium or a titanium alloy, and a passivation film formed on a surface of the substrate, wherein the passivation film includes a Li-containing titanium oxide layer in its surface layer. This titanium product can keep a low contact resistance with an electrode film and is inexpensive.

## Description

### TECHNICAL FIELD

The present invention relates to a titanium product for separators of a polymer electrolyte fuel cell.

### BACKGROUND ART

The fuel cell generates electric power using energy that occurs in binding reaction between hydrogen and oxygen. Therefore, the fuel cell is an electric power generation system of the next generation that is expected to be introduced and popularized in terms of both energy saving and environmental friendliness. The types of the fuel cells include solid electrolyte, molten carbonate, phosphoric acid, polymer electrolyte membrane, and other types.

Of these types, polymer electrolyte fuel cells (PEFCs) have high power density and provide an opportunity to downsize. In addition, the polymer electrolyte fuel cells (PEFCs) operate at temperatures lower than those at which other types of fuel cells operate, and are easy to start up and stop. With such advantages, the polymer electrolyte fuel cells (PEFCs) are expected to be used for automobiles and small-sized cogeneration for home use and have particularly received attention in recent years.

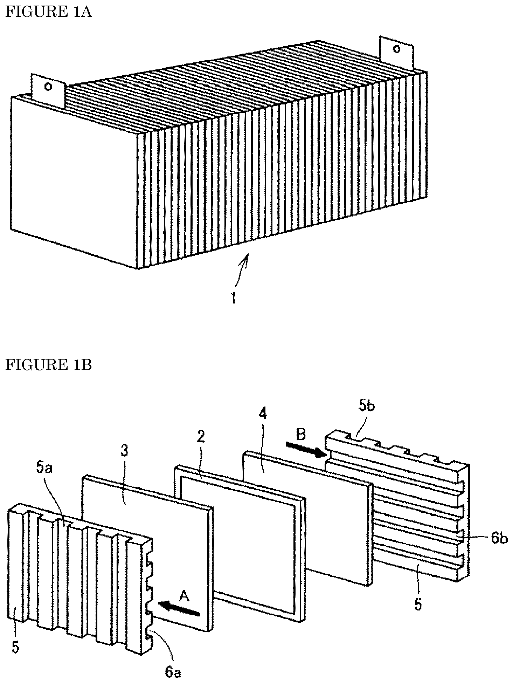

Figure 1A is a perspective view of a polymer electrolyte fuel cell (PEFC) (hereinafter, simply also referred to as a "fuel cell"), illustrating the entire fuel cell made up of a combination of a plurality of single cells. Figure 1B is an exploded perspective view of a single cell constituting the fuel cell.

As illustrated in Figure 1A, a fuel cell 1 is a set (stack) of single cells. In each single cell, as illustrated in Figure 1B, on one surface of a polymer electrolyte membrane 2, an anode-side electrode film (also called a "fuel electrode film"; hereinafter, referred to as an "anode") 3 is stacked, on the other surface, a cathode-side electrode film (also called an oxidant electrode film; hereinafter, referred to as a "cathode") 4 is stacked, and on both surfaces, separators (bipolar plates) 5a and 5b are stacked.

Examples of the fuel cells include a water-cooled fuel cell in which a separator having a distribution channel for cooling water is arranged between two adjacent single cells or for several single cells. The present invention also covers a titanium product for a separator of such a water-cooled fuel cell.

As the polymer electrolyte membrane (hereinafter, simply referred to as an "electrolyte membrane") 2, a fluorine-based proton conducting membrane having a hydrogen-ion (proton) exchange group is mainly used.

The anode 3 and the cathode 4 are each made up principally of a carbon sheet that is consisted of carbon fibers having good conductivity into a sheet shape (or a sheet of carbon paper thinner than the carbon sheet, or a piece of carbon cloth still thinner than the carbon sheet). The anode 3 and the cathode 4 may be each provided with a catalyst layer that consists of a particulate platinum catalyst, graphite powder, and as necessary, a fluororesin having a hydrogen-ion (proton) exchange group.

On a surface of the separator 5a on the anode 3 side, groove-shaped channels 6a are formed. Through these channels 6a, a fuel gas (hydrogen or a hydrogen-contained gas) A is caused to flow, so as to supply hydrogen to the anode 3. On a surface of the separator 5b on the cathode 4 side, groove-shaped channels 6b are formed. Through these channels 6b, an oxidative gas B such as air is caused to flow, so as to supply oxygen to the cathode 4. The anode 3 and the cathode 4 each function as a gas diffusion layer through which a fuel gas and an oxidative gas transmit. In the case where the anode 3 and the cathode 4 are each provided with the catalyst, this catalyst layer comes in contact with a fuel gas or an oxidative gas to promote the reaction. An electrochemical reaction occurs between the fuel gas and the oxidative gas, generating DC power.

The main functions required for separators of polymer electrolyte fuel cell (PEFCs) are as follows.
(1) The function as a "channel" for uniformly supplying a fuel gas or an oxidative gas to the inside of a cell surface
(2) The function as a "channel" for efficiently discharging water generated on the cathode side from the fuel cell out of the system, together with carrier gases such as air after the reaction, and oxygen
(3) The function of serving as a path of electricity by being in contact with an electrode film (the anode 3, cathode 4), and further serving as an electrical "connector" between two adjacent single cells
(4) The function as a "partition wall" between adjacent cells, between an anode chamber of one cell and a cathode chamber of the adjacent cell
(5) In a water-cooled fuel cell, the function as a "partition wall" between a cooling water channel and an adjacent cell

The substrate material of a separator used for a polymer electrolyte fuel cell (PEFC) (hereinafter, simply referred to as a "separator") needs to be one that can fulfill such functions. The substrate material is roughly categorized into a metal-based material and a carbon-based material.

In the case of using the metal-based material, a flat-shaped material is pressed and formed into a separator having a shape with groove-shaped channels and the like. The metal-based materials including titanium are excellent in workability, which is a metal-specific nature, and a separator can advantageously be thinner, which in turn enables the reduction of the weight of the separator.

However, the electric conductivity of the surface of a separator may decrease by oxidation of the surface of the separator. In addition, in the case where the electrolyte membrane is a fluorine-based proton conducting membrane, fluorine is released from the electrolyte membrane, which corrodes the surface of the separator to generate fluorides, with the result that the electric conductivity of the surface of the separator may decrease. This causes a problem of an increase in contact resistance between a separator consisting of metal-based materials and electrode films (an anode and a cathode). To solve this problem, the following measures are proposed.

Patent Document 1 proposes that, in a titanium separator substrate, a passivation film is removed from a surface to come into contact with an electrode, and thereafter the surface is formed with a layer of a noble metal such as gold by plating or the other method.

Patent Document 2 proposes, as a titanium separator with which a problem in corrosion resistance (oxidation resistance) of the titanium separator is solved without using a noble metal such as gold, a titanium separator on a surface of which a conductive contact layer consisting of carbon is formed by vapor deposition.

### LIST OF PRIOR ART DOCUMENTS

### PATENT DOCUMENT

Patent Document 1: JP2003-105523A
Patent Document 2: JP4367062B
Patent Document 3: JP5348355B
Patent Document 4: JP4981284B

### NON PATENT DOCUMENT

Non-Patent Document 1: Zhou Haoshen, AIST TODAY, 2006.10, p.17
Non-Patent Document 2: National Institute for Materials Science (NIMS), Atom Work Material Properties "Ti0.86Li0.57O2" and "TiLi0.2O2", [searched on Jun. 24, 2015], Internet (url: http://crystdb.nims.go.jp/crystdb/search-materials)
Non-Patent Document 3: Chauvet O. et al. Solid State Commun., 1995, vol. 93, p.667-669

### SUMMARY OF INVENTION

### TECHNICAL PROBLEM

The polymer electrolyte fuel cell (PEFC) described in Patent Document 1 is expected to be widely used as fuel cells for mobile objects and stationary fuel cells but is not yet in widespread use because using a large amount of noble metal raises a problem from the viewpoints of economic efficiency and restriction of resources. The vapor deposition described in Patent Document 2 requires special equipment to execute it, which increases a facility cost and elongates a production time, resulting in a rise in production cost (drop in productivity).

As described above, using prior art to reduce the contact resistance of a separator to an electrode film results in an increase in at least one of a raw-material cost and a production cost. An objective of the present invention is to solve such problems in prior art and to provide a titanium product for a separator of a polymer electrolyte fuel cell (PEFC) that is capable of keeping a low contact resistance with an electrode film and is inexpensive.

### SOLUTION TO PROBLEM

The present invention has a gist of the following titanium product.

(A) A titanium product for a separator of a polymer electrolyte fuel cell, the titanium product including:
   a substrate made of a titanium or a titanium alloy; and
   a passivation film formed on a surface of the substrate, wherein
   T1 is 15.0 nm or less, where T1 denotes an overall thickness of the passivation film, and
   the passivation film includes a Li-containing titanium oxide layer in a surface layer of the passivation film.
(B) The titanium product according to (A), wherein
   T2/T1 is 0.2 or more, where T2 denotes a thickness of the Li-containing titanium oxide layer.
(C) The titanium product according to (A) or (B), wherein a difference (T1 - T2) between T1 and T2 described above is 10.0 nm or less.
(D) The titanium product according to any one of (A) to (C), wherein T2/T1 described above is 0.5 or more.

### ADVANTAGEOUS EFFECTS OF INVENTION

The Li-containing titanium oxide layer has conductivity. For this reason, the contact resistance of a separator using this titanium product is low with an electrode film. In addition, this titanium product has corrosion resistance since it is formed with, on its surface, a titanium passivation film. The corrosion resistance is ensured by an oxide film of titanium, and containing Li hardly decreases the corrosion resistance. Therefore, a separator using this titanium product can suppress oxidation or fluoridation in a polymer electrolyte fuel cell (PEFC) and can keep the contact resistance with an electrode film low. Furthermore, it is possible to create a coating film having a thin thickness, of the order of nanometer, in comparison with a coating film created by plating or molten salt electrolysis, which thus allows conductivity and corrosion resistance to be both provided.

Furthermore, for the titanium product according to the present invention, using an expensive material such as a platinum group element and forming a conductive contact layer by vapor deposition are not necessary. For this reason, the titanium product according to the present invention can be inexpensive.

### BRIEF DESCRIPTION OF DRAWINGS

[Figure 1A] Figure 1A is a perspective view of a polymer electrolyte fuel cells.
[Figure 1B] Figure 1B is an exploded perspective view illustrating the structure of a single cell constituting the polymer electrolyte fuel cell.
[Figure 2] Figure 2 is a diagram for illustrating a method for measuring a contact resistance.
[Figure 3] Figure 3 is a graph illustrating an O concentration distribution in a depth direction that was measured as to a titanium product in Example 6.
[Figure 4] Figure 4 is a graph illustrating a Li concentration distribution in the depth direction that was measured as to the titanium product in Example 6.

### DESCRIPTION OF EMBODIMENTS

A titanium product according to the present invention includes a substrate that is made of titanium or a titanium alloy and a passivation film formed on a surface of the substrate. The passivation film includes, in its surface layer, a Li-containing titanium oxide layer. The passivation film including the Li-containing titanium oxide layer can be formed by, for example, subjecting the substrate to anodic oxidation, in a solution being at an appropriate temperature and containing Li, for an appropriate time.

### [Substrate]

The substrate consists of titanium or a titanium alloy. In the case where the substrate consists of titanium, this titanium can be of, for example, JIS Class 1 to Class 4. In the case where the substrate consists a titanium alloy, this titanium alloy can be, for example, a corrosion resistant titanium alloy of JIS Class 11, 12, 13, 17, 19, 20, or 21, the corrosion resistant titanium alloy described in Patent Document 3, or a high-strength titanium alloy of JIS Class 60.

### [Passivation Film]

In the passivation film, the Li-containing titanium oxide layer consist mainly of Ti, Li, and O. The portion of the passivation film excluding the Li-containing titanium oxide layer consist mainly of Ti and O, and contains, for example, one or more of TiO₂, TiO, Ti₃O, Ti₂O, Ti₃O₂, Ti₂O₃, Ti₃O₅, Ti₄O₇, and TiO₂.

As will be described later, the Li-containing titanium oxide layer has conductivity. However, in the passivation film, most of the portion excluding the Li-containing titanium oxide layer normally has no conductivity. When current flows through such a portion having no conductivity, it flows mainly by the tunnel effect. The tunnel effect occurs more easily as the thickness of the passivation film becomes smaller. For this reason, an overall thickness T1 of the passivation film is set at 15.0 nm or less, more preferably 10.0 nm or less, still more preferably 5.0 nm or less.

Meanwhile, in order for the titanium product to have a high corrosion resistance, the passivation film needs to have a large thickness to some extent. For this reason, the thickness of the passivation film is preferably 0.1 nm or more.

In general, the O (oxygen) concentration of the passivation film reaches its maximum in the vicinity of the surface of the passivation film and substantially decreases as a depth from the surface increases. It is assumed that the thickness of the passivation film refers to a depth at which the concentration of O becomes 1/2 of its maximum value in the distribution of the concentration of O in a depth direction, the distribution being measured by the Glow Discharge-Optical Emission Spectroscopy (GDOES). In the case where the concentration of O becomes 1/2 of the maximum value at depths of a plurality of levels, the shallowest depth of the plurality of depths of the levels is determined to be the thickness of the passivation film.

### [Anodic Oxidation Solution]

As to how to generate conductive Ti-Li-O compounds (Ti_{0.86}Li_{0.57}O₂, TiLi_{0.2}O₂) on a surface of a commercially pure titanium or a titanium alloy, the conductive Ti-Li-O compounds can be obtained by subjecting a commercially pure titanium product or a titanium alloy product to anodic oxidation in an aqueous solution containing Li ions. A condition for the anodic oxidation can be met by, but not limited to, adding Li ions to a solution containing fluorine ions and chlorine ions and retaining the solution at an anode side potential.

Specifically, the condition can be met by performing the anodic oxidation on a commercially pure titanium or a titanium alloy in a solution or the like containing a mixture of NaCl and Li₂CO₃, HCl and LiCl, and HF and LiCl. The Li ion concentration of the solution of the treatment is not limited, but at least 0.5 mol/solution kg is needed. This lower limit is determined as a minimum amount necessary to generate the aforementioned compounds. The effect of the Li ion concentration is enhanced as the concentration increases. However, due to a problem of the solubility of Li ions, it is practically desirable that the concentration falls within a range from 0.5 mol/solution kg to 5 mol/solution kg. A more preferable range is from 2 mol/solution kg to 4 mol/solution kg. The temperature for the treatment is from a normal temperature to a boiling point of the solution. In consideration of a practical safety, the treatment is desirably performed at from a normal temperature to 85°C. More preferably, the treatment is performed within a range from 40°C to 80°C.

### [Li-Containing Titanium Oxide Layer]

The Li-containing titanium oxide layer has conductivity. This lowers the contact resistance of a separator using this titanium product with an electrode film, and increases the electric power generation efficiency of the polymer electrolyte fuel cell (PEFC).

In regard to the Li-containing titanium oxide layer, the structure of constituent crystals and a mechanism to give rise to the conductivity have not been fully elucidated. Non-Patent Document 1 discloses that a layer consisting of TiO₂ having a rutile crystal structure occludes Li ions when the size of the rutile crystal structure becomes about 15 nm. In addition, Non-Patent Document 2 describes that the conductance of Ti_{0.86}Li_{0.57}O₂ (the inverse number of its resistivity) is 6.6 × 10³ Ω⁻¹m⁻¹, and the conductance of TiLi_{0.2}O₂ is 8.5 × 10³ Ω⁻¹m⁻¹. According to Non-Patent Document 3, the conductance of rutile TiO₂ is 1.0 × 10⁻⁵ Q⁻¹m⁻¹. Therefore, the conductances of Ti_{0.86}Li_{0.57}O₂ and TiLi_{0.2}O₂ are high in comparison with the conductance of the rutile TiO₂. From the above, the Li-containing titanium oxide layer according to the present invention contains TiO₂ having a rutile crystal structure that occludes Li, which raises the possibility of giving rise to the conductivity. Thus, the presence of the Li-containing titanium oxide layer on a surface makes the surface conductive, with the result that the contact resistance decreases. This effect lasts even after a corrosion resistance test.

In general, a depassivation pH of a titanium product is said to be pH = 1. In the corrosion resistance test in which the titanium product is immersed in a sulfuric acid solution of pH = 2, there is only little concern that a passivation film on a surface of the titanium product is depassivated and dissolved. The passivation film containing Li is formed by adding Li ions to a solution that contains fluoride ions and chloride ions, or a solution that solely contains fluoride ions or chloride ions, and retaining the solution at an anode side potential. A Li-containing passivation film obtained by performing the anodic oxidation in the above solution promoting the corrosion of a titanium is rich in corrosion resistance, does not give rise to depassivation as in the case of not containing Li, and is very small in effect of lowering contact resistance to be lost.

In the case of forming the Li-containing titanium oxide layer by the aforementioned anodic oxidation, the Li concentration of this Li-containing titanium oxide layer reaches its maximum in the vicinity of the surface of the Li-containing titanium oxide layer and substantially decreases as a depth from the surface increases. It is assumed that the thickness of the Li-containing titanium oxide layer refers to a depth at which the concentration of Li becomes 1/2 of its maximum value in the distribution of the concentration of Li in a depth direction, the distribution being measured by the GDOES.

When the overall thickness of the passivation film is denoted as T1 and the thickness of the Li-containing titanium oxide layer is denoted as T2, T2/T1 ≥ 0.2 is preferably satisfied, and T2/T1 ≥ 0.5 is more preferably satisfied. This allows the contact resistance of the titanium product to be lowered. In addition, the thickness of the passivation film containing no Li (T1 - T2) has a great influence of the contact resistance. In the present invention, the thickness of the passivation film containing no Li is desirably equal to or less than 10.0 nm.

### EXAMPLE

To confirm the effect of the present invention, samples of titanium products were prepared by the following method and were evaluated.

### 1. Pre-treatment of Titanium Product

Table 1 shows compositions of starting materials used for substrates of titanium products.

### [Table 1]

**Table 1**

| Starting material | Classification | Chemical composition (by mass%, balance Ti) | | | | | | | | | | |
|---|---|---|---|---|---|---|---|---|---|---|---|---|
| | | C | Fe | N | O | H | Al | V | Ni | Pd | Ru | Mm |
| 1 | JIS Class 1 | 0.01 | 0.04 | 0.01 | 0.07 | 0.001 | - | - | - | - | - | - |
| 2 | JIS Class 11 | 0.01 | 0.07 | 0.01 | 0.1 | 0.001 | - | - | - | 0.14 | - | - |
| 3 | JIS Class 17 | 0.01 | 0.04 | 0.01 | 0.06 | 0.001 | - | - | - | 0.06 | - | - |
| 4 | JIS Class 21 | 0.01 | 0.05 | 0.01 | 0.08 | 0.001 | - | - | 0.45 | - | 0.05 | - |
| 5 | JIS Class 60 | 0.011 | 0.221 | 0.01 | 0.14 | 0.007 | 6.59 | 4.42 | - | - | - | - |
| 6 | ASTM Gr.26 | 0.01 | 0.04 | 0.01 | 0.1 | 0.001 | - | - | - | - | 0.1 | - |
| 7 | Patent Document 3 | 0.01 | 0.07 | 0.01 | 0.1 | 0.001 | - | - | - | - | 0.03 | 0.002 |

Starting materials 1 to 5 are obtained as commercial ingots, and starting materials 6 and 7 are obtained by melting at a laboratory level. The starting material 7 has the composition described in Patent Document 3. For the starting materials 1 to 5, Table 1 shows analysis values, and for the starting materials 6 and 7, Table 1 shows analysis values of Ti materials and compositions (calculated values) based on compounding ratios of these Ti materials and raw materials of added elements.

As the raw materials of the starting material 6, used were a commercial, industrial pure titanium sponge (JIS Class 1) and a Ru chip from Furuya Metal Co., Ltd. (Ru content: 99.95% or higher). As the raw materials of the starting material 7, used were the above pure titanium sponge and Ru chip, and a misch metal from Kusaka rare metal products Co., Ltd. (Mm; a mixed rare earth metal before separation and refinement). This misch metal contained, in mass percent, La (lanthanum): 31.1%, Ce (cerium): 55.1%, Nd (neodymium): 9.2%, Sm (samarium): 0.3%, and the balance: heavy rare earth elements and Fe (iron).

For the production of the starting material 6, the pure titanium sponge and the Ru chip were adjusted to be 99.89:0.11 in mass ratio. For the production of the starting material 7, the pure titanium sponge, the Ru chip, and the misch metal were adjusted to be 99.955:0.035:0.01 in mass ratio. These adjustment raw materials were disposed in a water-cooled copper mold from Nihon-tokusyukikai and melted in an Ar arc button melting furnace using a non-consumable electrode for Ar arc melting, whereby button type ingots were obtained. For each of the starting materials 6 and 7, eight ingots of about 100 g were obtained. The ingots once completed its melting were reversed and remelted for homogenization.

Thereafter, the eight ingots were all remelted together, and a square ingot having a thickness of 15 mm was fabricated. This square ingot was remelted for homogenization and fabricated again into a square ingot having a thickness of 15 mm. That is, four meltings was performed in total from the raw materials to obtaining this ingot, for each starting material.

The square ingots made of the starting materials 6 and 7 each contain a trace quantity of platinum group elements, and the square ingot of the starting material 7 contains rare earth metals. Thus, there is the risk that the segregation of these elements occurs therein. In the case where such segregation occurs, heat treatment to reduce the segregation for the homogenization of these ingots was performed under the following conditions.
Atmosphere: Vacuum (< 10⁻³ Torr (0.133 Pa))
Temperature: 1100°C
Time: 24 hours

The square ingots and commercial ingots (the starting materials 1 to 5) treated with the above homogenizing heat treatment were subjected to hot rolling in the β region and hot rolling in the α+β region, in this order under the following conditions, whereby plate materials having a thickness of 1.5 mm were made.
Hot rolling in the β region: Heated at 1000°C
Hot rolling in the α+β region: Heated at 875°C

In the hot rolling in the β region, the thickness of each ingot was reduced from 15 mm to 9 mm. In the hot rolling in the α+β region, the thickness of each ingot was reduced from 9 mm to 4.5 mm.

Thereafter, scales on the front surface and the back face of each of the plate materials were removed by machining, whereby sheets each including metallic luster surfaces and having a thickness of 1.0 mm were obtained, and furthermore, the thickness of each of the sheets was reduced to 0.15 mm by cold rolling. The resultant sheets were subjected to stress relieving annealing in an Ar gas atmosphere at 650°C for 4 hours.

The resultant sheets were each subjected to pre-treatments to remove the passivation film and thereafter subjected to anodic oxidation in a solution containing Li so as to form a passivation film including a Li-containing titanium oxide layer. Thereby, titanium products in Examples of the present invention, namely, samples of a titanium product that includes a substrate consisting of a titanium or a titanium alloy and a passivation film formed on a surface of the substrate, the passivation film including a Li-containing titanium oxide layer formed in the surface layer of the passivation film.

In addition, as titanium products in Comparative Examples that fall out of the scope of the present invention, titanium products that were not subjected to the anodic oxidation in the solution containing Li were fabricated. In addition, as titanium products in Conventional Examples, titanium products satisfying the requirements described in Patent Documents 1 and 2 were fabricated. The titanium products in Conventional Examples were not subjected to the pre-treatments and the anodic oxidation.

For each titanium product, an initial contact resistance, a contact resistance after subjected to the corrosion resistance test, a thickness of the passivation film, and a thickness of the Li-containing titanium oxide layer were measured. "The initial contact resistance" refers to a contact resistance measured before performing treatment that can influence the surface state of a titanium product, such as the corrosion resistance test. Table 2A and Table 2B show, for each titanium product, the starting material in use, the conditions of the anodic oxidation, the contact resistances (an initial value and a value after the corrosion resistance test), the overall thickness T1 of the passivation film, the thickness T2 of the Li-containing titanium oxide layer, and the ratio T2/T1.

A titanium product in Comparative Example 1 was not subjected to the anodic oxidation. A titanium product in Comparative Example 2 was subjected to the anodic oxidation using a solution not containing Li. Therefore, the titanium products in Comparative Examples 1 and 2 included no Li-containing titanium oxide layers and thus fell out of the scope of the present invention in this regard.

Comparative Example 3 was a material in which the overall thickness T1 of the passivation film was larger than 15.0 nm. In addition, Comparative Example 4 was a material in which the titanium passivation film layer not containing Li has a thickness (T1 - T2) larger than 10.0 nm. Both of Comparative Examples were high in contact resistance after the corrosion resistance test.

### [Table 2A]

**Table 2A**

| Examples / Classification number | | Starting material | Pre-treatment | | Anodic Oxydation | | | Contact resistance (mΩ·cm²) | | | Overall thickness T1 of passivation film (nm) | Thickness T2 of Li containing Titanium oxyde layer (nm) | T1-T2 (nm) | T2/T1 |
|---|---|---|---|---|---|---|---|---|---|---|---|---|---|---|
| | | | Solution for pre-treatment | Condition of pre-treatment | Solution | Temperature (°C) | Time (s) | Initial value | Value after corrosion resistance test | Amount of increase of contact resistance | | | | |
| | Inventive Example 1 | 1 | A | 1mm/30°C immersion | D | 70 | 35 | 5.1 | 9.2 | 4.1 | 5.6 | 2.3 | 3.3 | 0.41 |
| | Inventive Example 2 | 1 | B | 1min/70°C immersion | E | 70 | 40 | 5.4 | 9.7 | 4.3 | 6.1 | 1.4 | 4.7 | 0.23 |
| | Inventive Example 3 | 1 | B | 1min/70°C immersion | F | 70 | 30 | 3.3 | 6.9 | 3.6 | 3.8 | 1.3 | 2.5 | 0.35 |
| | Inventive Example 4 | 1 | B | 1min/70°C immersion | G | 70 | 50 | 4.6 | 9.3 | 4.7 | 6.3 | 2.7 | 3.6 | 0.43 |
| | Inventive Example 5 | 1 | B | 1min/70°C immersion | G | 70 | 75 | 5.1 | 9.8 | 4.7 | 5.4 | 1.2 | 4.2 | 0.22 |
| | Inventive Example 6 | 1 | C | 1min/50°C immersion | G | 70 | 50 | 4.2 | 9.4 | 5.2 | 4.0 | 0.8 | 3.2 | 0.20 |
| Inventive | Inventive Example 7 | 1 | B | 0,5min/80°C immersion | F | 50 | 30 | 7.3 | 9.1 | 1.8 | 6.3 | 1.9 | 4.4 | 0.30 |
| Examples | Inventive Example 8 | 1 | C | 1min/50°C immersion | F | 50 | 30 | 8.3 | 9.8 | 1.5 | 7.2 | 2.1 | 5.1 | 0.29 |
| | Inventive Example 9 | 2 | B | 1min/70°C immersion | G | 70 | 40 | 8.6 | 9.7 | 1.1 | 14.1 | 4.3 | 9.8 | 0.30 |
| | Inventive Example 10 | 3 | A | 1min/30°C immersion | F | 70 | 40 | 7.4 | 7.7 | 0.3 | 9.8 | 5.1 | 4.7 | 0.52 |
| | Inventive Example 11 | 4 | A | 1min/30°C immersion | G | 70 | 40 | 6.2 | 7.0 | 0.8 | 8.9 | 5.5 | 3.4 | 0.62 |
| | Inventive Example 12 | 5 | C | 1min/50°C immersion | F | 70 | 40 | 8.1 | 9.9 | 1.8 | 14.7 | 4.8 | 9.9 | 0.33 |
| | Inventive Example 13 | 6 | B | 1min/70°C immersion | F | 70 | 40 | 7.3 | 8.8 | 1.5 | 14.6 | 4.7 | 9.9 | 0.32 |
| | Inventive Example 14 | 7 | B | 1min/70°C immersion | F | 70 | 40 | 4.1 | 4.4 | 0.3 | 3.8 | 3.0 | 0.8 | 0.79 |
| | Comparative Example 1 | 1 | B | 1min/70°C immersion | - | - | - | 6.3 | 1361.0 | 1354.7 | - * | - | - | - |
| Comparative | Comparative Example 2 | 2 | B | 1min/70°C immersion | II | 70 | 40 | 4.3 | 20.6 | 16.3 | - * | - | - | - |
| Examples | Comparative Example 3 | 3 | C | 1min/50°C immersion | F | 30 | 5 | 14.3 | 421.0 | 406.7 | 25.1 * | 2.1 | 23.0 | 0.08 |
| | Comparative Example 4 | 3 | C | 1min/50°C immersion | F | 30 | 3 | 10.1 | 54.0 | 43.9 | 14.9 | 2.1 | 128 | 0.14 |
| Conventional Examples | Conventional Example 1 | | | | | | | 7.8 | 8.1 | 0.3 | | | | |
| | Conventional Example 2 | | | | | | | 7.3 | 10.4 | 3.1 | | | | |
| | Conventional Example 3 | | | | | | | 13.2 | 136.1 | 122.9 | | | | |

| | | | | | | | | | | | | | | |
|---|---|---|---|---|---|---|---|---|---|---|---|---|---|---|
| A mark(*) represents deviation from the requirement specified by the present invention. | | | | | | | | | | | | | | |

### [Table 2B]

**Table 2B**

| Process | Sign in Table.2A | Composition of solution |
|---|---|---|
| Pre-treatment | A | 0.1% HF |
| | B | 9% HCl |
| | C | 8% HNO₃ + 2% HF |
| Anodic Oxidation | D | 5% Li₂CO₃ |
| | E | 15% LiCl |
| | F | 0.2% HF : LiCl = 85 : 15 ( weight ratio ) |
| | G | 7% HCl : LiCl = 80 : 20 |
| | H | 7%HCl |

### 2. Evaluation Method of Contact Resistance

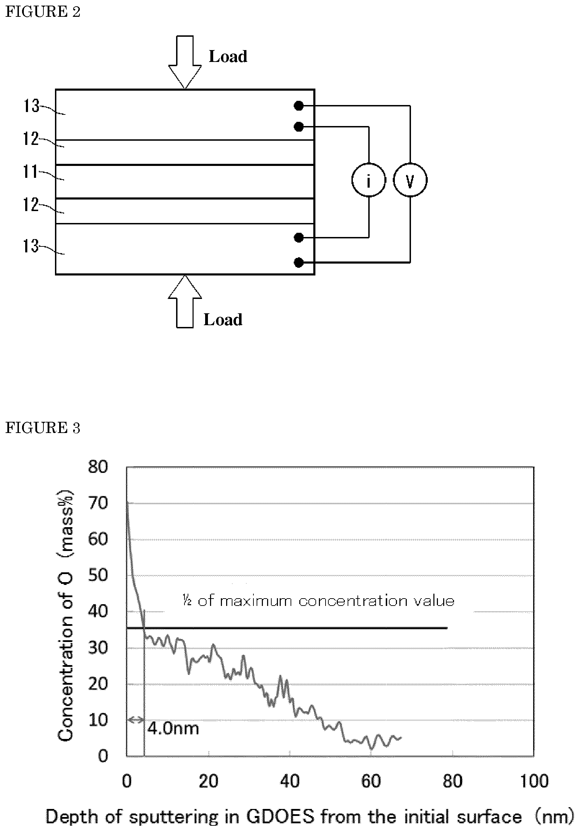

Figure 2 is a diagram for illustrating a method for measuring a contact resistance. Using a device schematically illustrated in Figure 2, a contact resistance was measured. Specifically, a titanium product 11 to be measured was first sandwiched between sheets of carbon paper (TGP-H-90 from Toray Industries, Inc.) 12 having an area of 1 cm² used in gas diffusion layers (the anode 3 and the cathode 4 in Figure 1B) of a polymer electrolyte fuel cell (PEFC), which was sandwiched between gold-plated electrodes 13. Next, a process in which a constant current was caused to flow across the gold-plated electrodes 13, a pressure of 10 kgf/cm² (9.8 × 10⁵ Pa) was applied for 10 seconds, and immediately thereafter the pressure was unloaded, was cycled 20 times, and a voltage drop occurring thereafter between the sheets of carbon paper 12 and the titanium product 11 was measured, and based on the result of the measurement, a resistance value was determined. The resultant resistance value is a value being the sum of the contact resistances of both surfaces of the titanium product 11, and thus the value was divided by two, which was regarded as a contact resistance value per single surface of the titanium product 11.

A determination is made as to whether a metal plate was good or poor, in such a manner that the metal plate was accepted when the contact resistance value was 10.0 mΩ.cm² or less. Hereinafter, a low contact resistance refers to a contact resistance the value of which is 10.0 mΩ.cm² or less, and a high contact resistance refers to a contact resistance the value of which is 10.0 mΩ.cm² or higher.

### 3. Corrosion Resistance Test

To investigate a corrosion resistance of each sample of the titanium product in a fuel cell simulation environment, the corrosion resistance test described in Patent Document 4 was conducted with the conditions therefor changed. Specifically, each sample was immersed in a sulfuric acid aqueous solution adjusted to pH = 2, rinsed and dried. Thereafter, a contact resistance of the sample was measured by the aforementioned method. What changed in the conditions of Patent Document 4 was that an immersion time of the sample in the sulfuric acid aqueous solution was 1000 hours in this test while it was 3000 hours in Patent Document 4. A sample the contact resistance of which increased through the immersion in the sulfuric acid aqueous solution is considered to change in its surface state by corrosion.

### 4. Measurement of Element Concentration Distribution in Depth Direction of Titanium Product Surface

As a Marcus-type RF glow discharge optical emission spectrometry instrument, GD-Profiler 2 from HORIBA, Ltd. was used, and the concentration of O and the signal intensity of Li were measured in a depth direction from a surface of a titanium product, within a region between a depth of an initial surface and a depth of 50 nm from the initial surface. At this point, a circular region having a diameter of 4 mm on the surface of the titanium product was determined as an analysis object, and a sputtering thickness in GDOES was determined as a depth from the initial surface.

The resultant signal intensity of Li was determined based on a calibration curve that is obtained as to an Al-Li alloy described later, whereby a depth distribution of the content of Li was determined. Based on this determination, for each sample, the thickness of the Li-containing titanium oxide layer under the aforementioned definition was determined. In addition, based on the resultant O concentration distribution, for each sample, the thickness of the passivation film under the aforementioned definition was determined.

Figure 3 illustrates the O concentration distribution in the depth direction that was measured as to a titanium product in Example 6. In Figure 3, the abscissa represents depth from the initial surface, and the ordinate represents the concentration of O. The concentration of O reached its maximum at the initial surface and substantially decreased as the depth increased, although the distribution included small fluctuates. The concentration of O became 1/2 of the maximum value at a depth of 4.0 nm, and thus the thickness of the passivation film formed on the titanium product was determined at 4.0 nm.

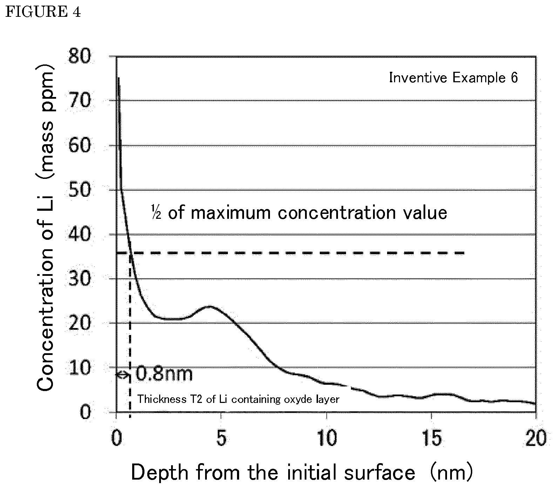

Figure 4 illustrates a Li concentration distribution in the depth direction that was measured as to the titanium product in Example 6. This Li concentration distribution was obtained by determining a distribution of the signal intensity of Li measured by GDOES, by means of a calibration curve described below, and by rendering the determination into a distribution of the concentration of Li. The calibration curve was created using the signal intensity of Li in an Al alloy available on the market and containing Li. This Al alloy was ALLOY 2099, which is an Al alloy for aircraft from Alcoa Corporation. Table 3 shows the composition of this Al alloy (described in the Mill Test Report thereof). In place of ALLOY 2099, use can be made of ALLOY 2090 or 8091, which are Al alloys from this company to create the calibration curve of Li.

### [Table 3]

**Table 3**

| Cu | Li | Mg | Zr | Fe | Si | Balance |
|---|---|---|---|---|---|---|
| 2.7 | 1.7 | 0.31 | 0.08 | 0.05 | 0.02 | Ti and impurities |

In Figure 4 the abscissa represents depth from the initial surface, and the ordinate represents the concentration of Li. The concentration of Li reached its maximum at the initial surface and substantially decreased as the depth increased, although the distribution included small fluctuates. The concentration of Li became 1/2 of the maximum value at a depth of 0.81 nm, and thus the thickness of the Li-containing titanium oxide layer formed on the passivation film of the titanium product was determined at 0.81 nm.

Titanium products in Examples 1 to 14 each showed a low initial contact resistance and a low contact resistance after the corrosion resistance test, both of which were 10.0 mΩ·cm² or less, irrespective of whether a commericially pure titanium or a titanium alloy was used as their starting materials. In particular, the titanium products in Examples 3, 6, and 14 all showed extremely low initial contact resistances, which were 5.0 mΩ·cm² or less. This is considered to have a relationship with the passivation films of these titanium products all having small thicknesses of 5.0 nm or less.

In addition, in each of Examples 10, 11, and 14, an amount of increase from an initial contact resistance to a contact resistance after the corrosion resistance test were both extremely low among Examples of the present invention, which were 1.0 mΩ·cm² or less. This is considered to have a relationship with the Li-containing titanium oxide layer in the passivation film having high ratios T2/T1 of 0.2 or more.

In the titanium product in Comparative Example 1, the contact resistance significantly increased through the corrosion resistance test; the contact resistance after the corrosion resistance test was 200 times or more the initial contact resistance. This is considered to be due to not performing the anodic oxidation on the titanium product in Comparative Example 1, which leads to formation of a passivation film having an insufficient thickness, with the result that the surface of the titanium product was oxidized thickly in the corrosion resistance test.

In the titanium product in Comparative Example 2, the contact resistance after the corrosion resistance test was higher than 10.0 mΩ·cm². This is considered to be due to performing the anodic oxidation on the titanium product in Comparative Example 2 in the solution not containing Li ions, which leads to a failure of forming the Li-containing titanium oxide layer, resulting in a poor conductivity in comparison with those in Examples of the present invention.

In the material in Comparative Example 3, the overall thickness T1 of the passivation film was large, which was 15.0 nm or more, and thus a layer having a low conductivity was thick. In addition, in the material in Comparative Example 4, the passivation film thickness layer not containing Li was thick, which was 10.0 nm or more. Therefore, the initial contact resistances took values of larger than 10.0 mΩ·cm² due to the influence of the overall thickness of these passivation films, even with conductive coating films containing Li generated on the surfaces of the passivation films.

A titanium product in Conventional Example 1 showed a contact resistance value that was on a par with those of the titanium products in Examples of the present invention. However, this titanium product needs the use of noble metals, which increases costs. A titanium product in Conventional Example 2 showed a contact resistance higher than those of the titanium products in Examples of the present invention, and in addition, the titanium product needs formation of a conductive contact layer by vapor deposition, resulting in high production costs. In other words, the titanium products in Examples of the present invention can provide low contact resistances that are as good as or better than those of the titanium products in Conventional Examples 1 and 2, and can reduce the costs thereof at the same time.

### REFERENCE SIGNS LIST

1: polymer electrolyte fuel cell (PEFC)
2: polymer electrolyte membrane
3: anode
4: cathode
5a, 5b: separator

## Claims

1. A titanium product for a separator of a polymer electrolyte fuel cell, the titanium product comprising:
a substrate consisting of a titanium or a titanium alloy; and
a passivation film formed on a surface of the substrate, wherein
T1 is 15.0 nm or less, where T1 denotes an overall thickness of the passivation film, and
the passivation film comprises a Li-containing titanium oxide layer in a surface layer of the passivation film.

2. The titanium product according to claim 1, wherein
T2/T1 is 0.2 or more, where T2 denotes a thickness of the Li-containing titanium oxide layer.

3. The titanium product according to claim 1 or 2, wherein a difference (T1 - T2) between T1 and T2 is 10.0 nm or less.

4. The titanium product according to any one of claims 1 to 3, wherein T2/T1 is 0.5 or more.
